# EUROPÄISCHE PATENTSCHRIFT

(11) **EP 1 746 054 B1**
(45) Veröffentlichungstag und Bekanntmachung des Hinweises auf die Patenterteilung: **23.01.2008**
(21) Anmeldenummer: 05022965.7
(22) Anmeldetag: 21.10.2005
(51) Int. Cl.: B65G 47/29, B65G 47/88, B23Q 16/00

(54) **Anschlagmodul mit einem elektrischen Drehantrieb**
Stop module driven by electrical motor
Module butée avec entrainement par moteur electrique

(30) Priorität: 19.07.2005 EP 05015616
(43) Veröffentlichungstag der Anmeldung: 24.01.2007
(73) Patentinhaber: Wörner, Helmut, 73770 Denkendorf (DE); Unterhuber, Sebastian, 73257 Köngen (DE)
(72) Erfinder: Unterhuber, Sebastian, 73257 Köngen (DE)
(74) Vertreter: Vogler, Bernd

(56) Entgegenhaltungen:
- EP-A- 0 038 871
- EP-A- 0 484 648
- DE-A1- 3 810 754
- DE-U1- 20 207 436
- US-A- 6 087 623

## Beschreibung

Die Erfindung betrifft ein Anschlagmodul, insbesondere für automatische Bearbeitungs- und Fördereinrichtungen, mit einem an einem Grundkörper angeordneten Anschlagglied für sich in einer Bewegungsebene in einer aktuellen Arbeitsbewegungsrichtung bewegende Gegenstände, das mittels einer elektrischen Betätigung aus dieser Bewegungsebene heraus und in diese zurück bewegbar ist, wobei zur elektrischen Betätigung ein elektrischer Drehantrieb vorgesehen ist.

Aus der EP 0 038 871 ist ein Anschlagmodul der eingangs erwähnten Art bekannt, das einen elektrischen Drehantrieb aufweist, mit einem Elektromotor, der über ein Getriebe ein Wellenstück rotierend antreibt. Die Kraftübertragung erfolgt über ein Kurbelgetriebe, wobei ein Hubbolzen vorgesehen ist, der über eine Exzenterscheibe samt Exzenterrolle mit der Welle gekoppelt ist, so dass eine auf- bzw. abwärts gerichtete Bewegung des Hubbolzens ausgelöst wird.

Fluidisch betätigbare Anschlagmodule sind auch aus der EP 0 484 648 bekannt. Der dort beschriebene Anschlag ist mittels eines pneumatisch betätigbaren Stellkolbens aus der Bewegungsbahn anfahrender Werkstücke heraus und in diese zurück bewegbar. Für die Druckluftbeaufschlagung ist am Gehäuse ein Druckluftanschluss vorgesehen, über den gesteuerte Druckluft zugeführt wird. Ferner ist dem Anschlag eine Dämpfungseinrichtung zugeordnet, so dass die Bewegung der anschlagenden Werkstücke abgedämpft werden kann.

In bestimmten automatischen Bearbeitungs- und Fördereinrichtungen sind mit einem fluidischen Arbeitsmedium, insbesondere Druckluft betriebene Anschlagmodule jedoch ungeeignet, da das fluidische Arbeitsmedium hier zu Beeinträchtigungen beim Bearbeitungsprozess führen kann. Als Beispiel hierfür sind Lakkierstraßen zu nennen. Um dem Abhilfe zu schaffen, sind bereits Anschlagmodule bekannt, deren Anschlagglieder elektrisch betätigbar sind.

Aufgabe der Erfindung ist es, ein Anschlagmodul der eingangs erwähnten Art zu schaffen, das gegenüber herkömmlichen elektrisch betriebenen Anschlagmodulen universeller und kostengünstiger einsetzbar ist.

Diese Aufgabe wird erfindungsgemäß durch ein Anschlagmodul mit den Merkmalen des unabhängigen Anspruchs 1 gelöst. Weiterbildungen der Erfindung sind in den Unteransprüchen dargestellt.

Das erfindungsgemäße Anschlagmodul zeichnet sich dadurch aus, dass der elektrische Drehantrieb als Spindelantrieb ausgebildet ist.

Solche elektrischen Drehantriebe zeichnen sich durch eine relativ kompakte Bauweise aus, so dass sie in das Anschlagmodul integrierbar sind. Auch ist die Energieaufnahme im Vergleich zu herkömmlichen elektrisch betätigbaren Anschlagmodulen geringer. Das erfindungsgemäße Anschlagmodul besitzt also insgesamt eine relativ kompakte Bauform, so dass es bedingt durch die relativ geringe Energieaufnahme des elektrischen Drehantriebs kostengünstig in verschiedensten automatischen Bearbeitungs- und Fördereinrichtungen eingesetzt werden kann, insbesondere auch in solchen, bei denen der Einsatz fluidischer Arbeitsmedien kritisch ist.

Mittels des Spindelantriebs kann eine rotatorische Abtriebsbewegung erzeugt werden, die über Umsetzmittel in eine zur Bewegungsebene der Gegenstände hin oder aus dieser heraus gerichtete Linearbewegung des Anschlagglieds umsetzbar ist.

Eine besonders kompakte Bauform des Anschlagmoduls lässt sich dadurch realisieren, dass der elektrische Drehantrieb als Spindelantrieb ausgebildet ist. Der Spindelantrieb kann als Umsetzmittel eine Spindel und eine mit der Spindel zusammenwirkende Spindelmutter aufweisen.

Es ist möglich, dass dem Spindelantrieb zugeordnete Hubunterstützungsmittel vorgesehen sind, die mit Zusatzkraft den vom elektrischen Drehantrieb erzeugten Abwärtshub des Anschlagsgliedes aus der Bewegungsebene heraus unterstützen. Ist das Anschlagglied in seiner oberen Funktionsstellung und ist ein Gegenstand angeschlagen, so entsteht beim Abwärtshub zwischen dem Anschlagglied und dem angeschlagenen Gegenstand Reibung, so dass beim Abwärtshub zusätzliche Hubkraft erforderlich ist. Diese zusätzliche Hubkraft bzw. Zusatzkraft kann dann von den Hubunterstützungsmitteln bereit gestellt werden.

In bevorzugter Weise ist als Hubunterstützungsmittel wenigstens eine Feder vorgesehen, die einerseits ortsfest und andererseits an der sich linear auf- oder abbewegenden Spindelmutter des Spindelantriebs abgestützt ist, so dass sie beim Aufwärtshub gespannt wird und beim Abwärtshub die Zusatzkraft in Form einer Rückstellkraft abgibt.

Bei einer Weiterbildung der Erfindung ist das Anschlagglied derart ausgebildet und ist mittels Abstützmitteln in einer in der Bewegungsebene der Gegenstände befindlichen oberen Funktionsposition derart abgestützt, dass wahlweise sich in einer ersten Arbeitsbewegungsrichtung bewegende Gegenstände oder sich in einer im Wesentlichen senkrecht zur ersten Arbeitsbewegungsrichtung verlaufenden zweiten Arbeitsbewegungsrichtung bewegende Gegenstände anhaltbar bzw. vereinzelbar sind. Dadurch ist es möglich, je nach Platzbedarf an der Bearbeitungs- und Fördereinrichtung, das Anschlagmodul in unterschiedliche Einbaurichtungen einzubauen, da es keine bevorzugte Anschlagrichtung zum Anschlagen an das Anschlagglied gibt. Auch ist es möglich, das Anschlagmodul an einen Knoten bzw. an eine Kreuzung einer Fördereinrichtung anzubauen, so dass wahlweise oder gleichzeitig aus im Wesentlichen senkrecht zueinander versetzten Arbeitsbewegungsrichtungen ankommende Gegenstände vereinzelt werden können.

In besonders bevorzugter Weise besitzt das Anschlagmodul eine Führungseinheit zur Führung des Anschlagglieds bei dessen Bewegung aus der Bewegungsebene der Gegenstände heraus oder in diese hinein. Die Führungseinheit kann eine insbesondere schlitzartige Aufnahme besitzen, in die das Anschlagglied in einer unteren Ruhestellung insbesondere komplett versenkbar ist und aus der das Anschlagglied in der oberen Funktionsstellung zum Teil hervorsteht. In wenigstens einer der Ar= beitsbewegungsrichtungen der Gegenstände kann als Abstützmittel ein in der aktuellen Arbeitsbewegungsrichtung hinter dem Anschlagglied liegender Wandabschnitt der Führungseinheit dienen.

Das Anschlagglied kann mittels einer Gleitlagerung gleitend in der Aufnahme der Führungseinheit gelagert sein. Es ist möglich, Schmiermittel, beispielsweise Schmierfett, einzusetzen, um die Reibung zwischen dem sich auf- und abbewegenden Anschlagglied und der Führungseinheit zu verringern.

Bevorzugte Ausführungsbeispiele der Erfindung sind in der Zeichnung dargestellt und werden im Folgenden näher erläutert. Die Zeichnung zeigt:
- Figur 1: ein nicht zur Erfindung gehörendes Ausführungsbeispiel eines Anschlagmoduls in perspektivischer Ansicht,
- Figur 2: das Anschlagmodul von Figur 1 in Seitenansicht,
- Figur 3: einen Teillängsschnitt durch das Anschlagmodul von Figur 1 entlang der Linie III-III aus Figur 1,
- Figur 4: einen Querschnitt durch das Anschlagmodul von Figur 1 entlang der Linie IV-IV aus Figur 1 und
- Figur 5: ein Ausführungsbeispiel des erfindungsgemäßen Anschlagmoduls in vergrößerter Darstellung gemäß dem Teillängsschnitt entlang der Linie III-III aus Figur 1.

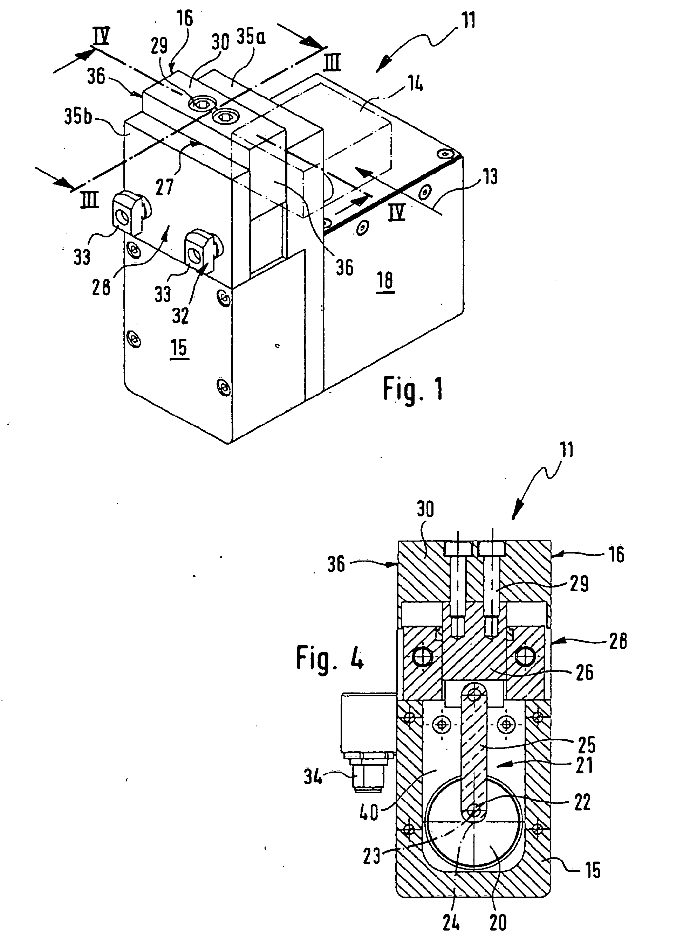

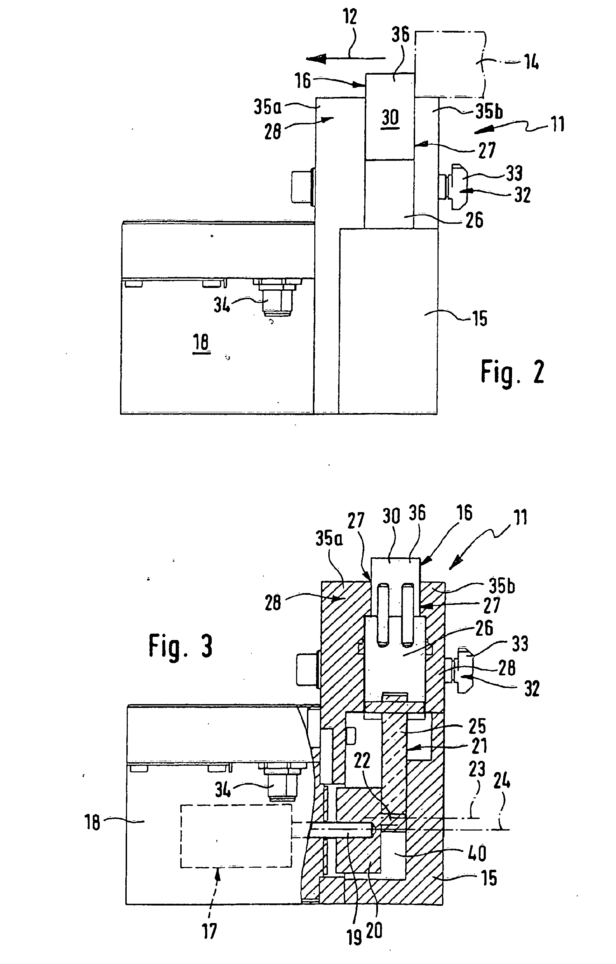

Die Figuren 1 bis 4 zeigen ein erstes, nicht zur Erfindung gehörendes Ausführungsbeispiel des Anschlagmoduls 11, das vorzugsweise in automatischen Bearbeitungs- und Fördereinrichtungen eingesetzt wird, um sich in einer Bewegungsebene in einer ersten Arbeitsbewegungsrichtung 12 (Figur 2) oder in einer zur ersten Arbeitsbewegungsrichtung 12 im Wesentlichen senkrecht verlaufenden zweiten Arbeitsbewegungsrichtung 13 (Figur 1) sich bewegende Gegenstände 14, beispielsweise Werkstücke oder dergleichen zu vereinzeln. Nach der Vereinzelung der Gegenstände können diese dann individuell behandelt, beispielsweise bearbeitet, umgeleitet usw. werden.

Das Anschlagmodul 11 besitzt einen Grundkörper 15, an dem ein Anschlagglied 16 angeordnet ist, das mittels eines elektrischen Drehantriebs 17 aus der Bewegungsebene der Gegenstände 14 heraus und in diese zurückbewegbar ist.

Der elektrische Drehantrieb 17 ist gemäß dem ersten Ausführungsbeispiel als elektrischer Stellmotor ausgebildet und befindet sich in einer vom Grundkörper 15 und vom Anschlagglied 16 getrennten Antriebsmoduleinheit 18. Diese Antriebsmoduleinheit 18 kann gegebenenfalls lösbar am Grundkörper 15 befestigt sein. Der Stellmotor des elektrischen Drehantriebs 17 treibt eine Abtriebswelle 19 rotatorisch an, an der am motorfernen Ende eine Kurbelscheibe 20 eines Kurbelgetriebes 21 drehfest mit der Abtriebswelle 19 verbunden ist.

Die Kurbelscheibe 20 besitzt einen stirnseitig nach außen hervorstehenden Zapfen 22, dessen Zapfenachse 23 exzentrisch zur Rotationsachse 24 der Abtriebswelle 19 liegt.

Auf den Zapfen 22 ist ein Kurbelarm 25 des Kurbelgetriebes 21 drehbeweglich aufgesteckt, der seinerseits an seinem kurbelscheibenfernen Ende drehbeweglich an einem insbesondere zylindrischen Basiskörper 26 des Anschlagglieds 16 befestigt ist.

Kurbelscheibe 20 und Kurbelarm 25 befinden sich in einem Aufnahmeraum 40 im Grundkörper 15, während das Anschlagglied 16 in einer schlitzartigen Aufnahme 27 einer Führungseinheit 28 aufgenommen ist. Die Führungseinheit 28 besitzt zwei Wandabschnitte 35a, 35b, die beidseits des Anschlagglieds 16 angeordnet sind und in nachfolgend näher erläuterter Wiese als Abstützmittel beim Aufprall eines Gegenstandes 14 dienen.

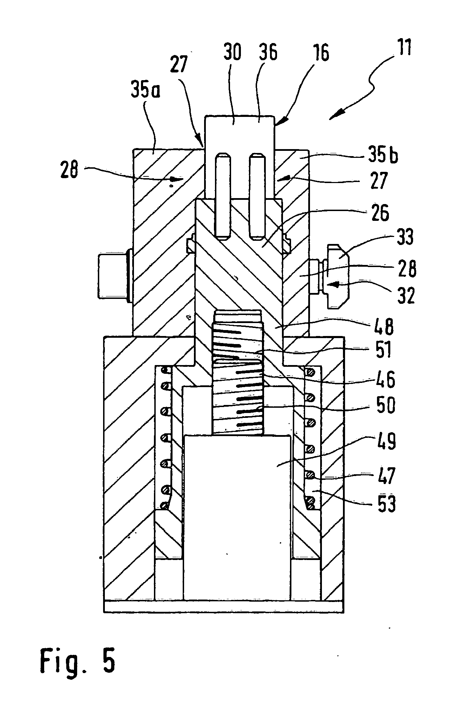

Wie bereits erwähnt, besitzt das Anschlagglied 16 einen Basiskörper 26, an dem einerseits der Kurbelarm 25 des Kurbelgetriebes 21 drehbar angelenkt ist und an dem andererseits über Befestigungsmittel, insbesondere Befestigungsschrauben 29, ein Endteil 30 des Anschlagglieds 16 befestigt ist, an das im ausgefahrenen Zustand die zu vereinzelnden Gegenstände 14 anschlagen können. Endteil 30 und Basiskörper 26 des Anschlagglieds 16 besitzen wie insbesondere in Figur 4 dargestellt eine in etwa T-artige Form, wobei das Endteil 30 relativ breit ausgebildet ist und sich im Wesentlichen über die gesamte Breite der Führungseinheit 28 erstreckt. Der Basiskörper 16 ist über eine Gleitlagerung gleitend in einer zylindrischen Verlängerungsöffnung 31 der schlitzartigen Aufnahme 27 gelagert. Um die Reibung zwischen den Innenwandungen der Verlängerungsöffnung 31 und dem zylindrischen Basiskörper 26 zu vermindern, werden Schmiermittel, insbesondere in Form von Schmierfett eingesetzt.

An der Führungseinheit 28 befindet sich ferner eine Halterung 32, über die das gesamte Anschlagmodul an einer Bearbeitungs- und Fördereinrichtung (nicht dargestellt) befestigt werden kann. Die Halterung 32 kann beispielsweise zwei auf gleicher Höhe befindliche Nutensteine 33 aufweisen, die jeweils drehbar auf einem Gewindebolzen gelagert sind. Dadurch lässt sich das Anschlagmodul 11 beispielsweise in eine Schiene (nicht dargestellt) einhängen.

Es ist ferner noch ein elektrischer Anschluss 34 zur Stromversorgung des elektrischen Drehantriebs 17 vorgesehen, wobei sich der elektrische Anschluss 34 wie in den Figuren 2 bis 4 in beispielhafter Weise dargestellt, an der Außenseite der Antriebsmoduleinheit 18 befindet.

Um einen ankommenden Gegenstand 14 zu vereinzeln, wird zunächst der elektrische Drehantrieb 17 in Gang gesetzt, so dass die Abtriebswelle 19 rotatorisch angetrieben wird. Dabei dreht sich die an der Abtriebswelle 19 sitzende Kurbelscheibe 20 mit und der Kurbelarm 25 wird, je nach vorheriger Lage, durch die exzentrische Anlenkung entweder nach oben oder nach unten bewegt. Die Drehbewegung der Abtriebswelle 19 wird so lange fortgesetzt, bis das am Kurbelarm befestigte Anschlagglied 16 seinen höchsten Punkt erreicht hat und sich mithin in seiner oberen Funktionsstellung befindet. Dann wird der Stellmotor abgestellt und somit die Rotationsbewegung der Abtriebswelle 19 beendet. Das Anschlagglied 16 ist nunmehr zum Vereinzeln bzw. Stoppen ankommender Gegenstände 14 bereit. Diese können sich wahlweise oder auch gleichzeitig in der ersten Arbeitsbewegungsrichtung 12 und/oder in der sich im Wesentlichen senkrecht dazu befindlichen zweiten Arbeitsbewegungsrichtung 13 bewegen. Wie insbesondere in den Figuren 1 und 2 dargestellt, wird das Endteil 30 des Anschlagglieds 16 beim Aufprall sich in der ersten Arbeitsbewegungsrichtung 12 bewegenden Gegenständen 14 durch den in Aufprallrichtung hinter dem Anschlagglied 16 liegenden Wandabschnitt 35a der Führungseinheit 28 abgestützt. In dieser Richtung können also auch relativ schwere Gegenstände gestoppt werden, während die schmalen Stirnseiten 36 des Endteils eher zum Stoppen leichterer Gegenstände geeignet ist, da in dieser Richtung keine Abstützung durch die Führungseinheit erfolgt.

Zum Freigeben des gestoppten Gegenstandes 14 wird der Stellmotor wieder in Betrieb gesetzt, so dass sich die Abtriebswelle 19 weiterdreht, wodurch das Endteil 30 des Anschlagglieds 16 wieder in seine schlitzartige Aufnahme 27 einfährt, so dass der Gegenstand 14 passieren kann.

Figur 5 zeigt ein Ausführungsbeispiel eines erfindungsgemäßen Anschlagmoduls 11, das sich vom ersten, nicht erfindungsgemäßen Ausführungsbeispiel dadurch unterscheidet, dass als elektrischer Drehantrieb ein Spindelantrieb 17 verwendet wird. Der Spindelantrieb besteht im Wesentlichen aus einer Antriebseinheit 49, die eine mit ihr gekoppelte Spindel 46 rotatorisch antreibt. Antriebseinheit 49 und Spindel 46 sind ortsfest gelagert. Die Spindel 46 besitzt ein Außengewinde 50, das mit einem an einer Spindelmutter 48 ausgebildeten Innengewinde derart zusammenwirkt, dass die Spindelmutter 48 je nach Drehrichtung der Spindel 46 mehr oder weniger stark mit der Spindel 46 zusammengeschraubt wird, d.h. die Spindelmutter 48 führt wahlweise einen Aufwärts- oder einen Abwärtshub durch.

Wie in Figur 5 dargestellt, wird die Spindelmutter 48 durch den unteren Teil des Basiskörpers 26 gebildet, dessen oberer Teil mit dem Endteil 30 verbunden ist. Die Spindelmutter 48 besitzt ferner einen Hülsenabschnitt 52, der die Antriebseinheit 49 des Spindelantriebs hülsenartig umgreift. An der Mantelfläche des Hülsenabschnitts 52 befindet sich eine hohlzylinderartige Ausnehmung 53, in die Hubunterstützungsmittel in Form einer Feder 47 integriert sind. Die Feder 47 stützt sich einerseits ortsfest am Grundkörper 15 ab, während die Abstützung andererseits am Endbereich des Hülsenabschnitts 52 erfolgt.

Um das Anschlagglied 16 in seine ausgefahrene Position zu bringen, wird die Antriebseinheit 49 aktiviert und die Spindel 46 in Drehbewegung versetzt, so dass sich die Spindelmutter 48 von der Spindel 46 herunterschraubt, also nach oben bewegt wird. Dabei wird das angekoppelte Anschlagglied 16 ebenfalls nach oben bewegt. Gleichzeitig wird die Feder 47 beim Aufwärtshub gespannt. Soll das Anschlagglied 16 aus der Bewegungsebene der Gegenstände 14 heraus wieder in seine eingefahrene Position bewegt werden, so wird die Bewegungsrichtung der Spindel 46 umgekehrt, so dass sich die Spindelmutter 48 auf die Spindel 46 schraubt, wodurch dann wiederum das angekoppelte Anschlagsglied 16 einen Abwärtshub durchführt. In der ausgefahrenen Position des Anschlagglieds 16 ist in der Regel ein zu vereinzelnder Gegenstand 14 an das Anschlagglied 16 angeschlagen, steht also in Kontakt mit dem Anschlagglied 16. Dadurch entsteht beim Abwärtshub des Anschlagglieds 16 Reibung zwischen dem Anschlagglied 16 und dem Gegenstand 14. Dies erfordert zusätzliche Hubkraft, die hier durch die Hubunterstützungsmittel in Form der Feder 47 aufgebracht wird. Da die Feder 47 im ausgefahrenen Zustand des Anschlagsglieds 16 vorgespannt ist, kann sie sich folglich beim Abwärtshub wieder entspannen und so ihre Rückstellkraft zusätzlich zur vom Spindelantrieb 17 aufgebrachten Hubkraft zur Verfügung stellen.

Insgesamt zeichnet sich das erfindungsgemäßen Ausführungsbeispiel des Anschlagmoduls 11 durch eine sehr kompakte Bauweise aus, da der Spindelantrieb 17 quasi in einer Linie unterhalb des Anschlagglieds 16 sitzen kann.

## Patentansprüche

1. Anschlagmodul, insbesondere für automatische Bearbeitungs- und Fördereinrichtungen, mit einem an einem Grundkörper (15) angeordneten Anschlagglied (16) für sich in einer Bewegungsebene in einer aktuellen Arbeitsbewegungsrichtung (12, 13) bewegende Gegenstände (14), das mittels einer elektrischen Betätigung aus dieser Bewegungsebene heraus und in diese zurückbewegbar ist, wobei zur elektrischen Betätigung ein elektrischer Drehantrieb vorgesehen ist, **dadurch gekennzeichnet, dass** der elektrische Drehantrieb als Spindelantrieb (17) ausgebildet ist.

2. Anschlagmodul nach Anspruch 1, **dadurch gekennzeichnet, dass** mittels des Spindelantriebs (17) eine rotatorische Abtriebsbewegung erzeugbar ist, die über Umsetzmittel (21) in eine zur Bewegungsebene der Gegenstände (14) hin oder aus dieser heraus gerichtete Linearbewegung des Anschlagglieds (16) umsetzbar ist.

3. Anschlagmodul nach Anspruch oder 2, **dadurch gekennzeichnet, dass** der Spindelantrieb (17) als Umsetzmittel eine Spindel (46) und eine mit der Spindel (46) zusammenwirkende Spindelmutter (48) aufweist.

4. Anschlagmodul nach einem der vorhergehenden Ansprüche, **dadurch gekennzeichnet, dass** dem Spindelantrieb (17) zugeordnete Hubunterstützungsmittel (47) vorgesehen sind, die mit Zusatzkraft den vom Spindelantrieb (17) erzeugten Abwärtshub des Anschlaggliedes (16) aus der Bewegungsebene heraus unterstützen.

5. Anschlagmodul nach Anspruch 4, **dadurch gekennzeichnet, dass** als Hubunterstützungsmittel wenigstens eine Feder (47) vorgesehen ist, die einerseits ortsfest und andererseits an der sich linear auf- oder abbewegenden Spindelmutter (48) abgestützt ist, so dass sie beim Aufwärtshub gespannt wird und beim Abwärtshub die Zusatzkraft in Form einer Rückstellkraft abgibt.

6. Anschlagmodul nach einem der vorhergehenden Ansprüche, **dadurch gekennzeichnet, dass** das Anschlagglied (16) derart ausgebildet ist und mittels Abstützmitteln in einer in der Bewegungsebene der Gegenstände (14) befindlichen oberen Funktionsposition derart abgestützt ist, dass wahlweise sich in einer ersten Arbeitsbewegungsrichtung (12) bewegende Gegenstände (14) oder sich in einer im Wesentlichen senkrecht zur ersten Arbeitsbewegungsrichtung (12) verlaufenden zweiten Arbeitsbewegungsrichtung (13) bewegende Gegenstände stoppbar sind.

7. Anschlagmodul nach einem der vorhergehenden Ansprüche, **dadurch gekennzeichnet, dass** eine Führungseinheit (28) zur Führung des Anschlagglieds (16) bei dessen Bewegung aus der Bewegungsebene der Gegenstände (14) heraus oder in diese hinein vorgesehen ist.

8. Anschlagmodul nach Anspruch 7, **dadurch gekennzeichnet, dass** die Führungseinheit (28) eine insbesondere schlitzartige Aufnahme (27) aufweist, in die das Anschlagglied (16) in einer unteren Ruhestellung insbesondere komplett versenkbar ist und aus der das Anschlagglied in der oberen Funktionsstellung zum Teil hervorsteht, wobei in wenigstens einer der Arbeitsbewegungsrichtungen (12, 13) der Gegenstände (14) als Abstützmittel ein in der aktuellen Arbeitsbewegungsrichtung (12, 13) hinter dem Anschlagglied (16) liegender Wandabschnitt der Führungseinheit (28) dient.

9. Anschlagmodul nach Anspruch 8, **dadurch gekennzeichnet, dass** das Anschlagglied (16) mittels einer Gleitlagerung gleitend in der Aufnahme (27) gelagert ist.

10. Anschlagmodul nach einem der Ansprüche 3 bis 9, **dadurch gekennzeichnet, dass** das Anschlagglied (16) einen mit der Spindel (46) gekoppelten Basiskörper (26) und ein mit dem Basiskörper (26) über Befestigungsmittel verbundenes, zum Stoppen der Gegenstände (14) dienendes Endteil (30) aufweist.

## Claims

1. Stop module, in particular for automatic machining and conveying equipment, with a stop element (16) located on a base body (15) for objects (14) moving in a movement plane in a current working movement direction (12, 13), said stop element being capable of being moved out of and into the said movement plane by means of electric actuation, wherein an electric rotary drive is provided for electric actuation, **characterised in that** the electric rotary drive is designed as a spindle drive (17).

2. Stop module according to claim 1, **characterised in that** by means of the spindle drive (17) a rotatory output movement can be generated, which can be converted into a linear movement of the stop element (16) towards to or away from the movement plane of the objects (14) via conversion means (21).

3. Stop module according to claim 1 or 2, **characterised in that** the spindle drive (17) comprises a spindle (46) and a spindle nut (48) acting together with the spindle (46) as conversion means.

4. Stop module according to any of the preceding claims, **characterised in that** stroke supporting means (47) are assigned to the spindle drive (17) to support with additional force the downward stroke of the stop element (16) out of the movement plane as generated by the spindle drive (17).

5. Stop module according to claim 4, **characterised in that** the stroke supporting means are represented by at least one spring (47), one end of which is stationary while the other end is supported on the spindle nut (48) moving upwards or downwards in a linear manner, so that it is loaded during the upward stroke and delivers the additional force as a restoring force during the downward stroke.

6. Stop module according to any of the preceding claims, **characterised in that** the stop element (16) is designed such and supported such by supporting means in an upper functional position located in the movement plane of the objects (14) that objects (14) moving either in a first working movement direction (12) or in a second movement direction (13) extending substantially at right angles to the first movement direction (12) can be stopped as required.

7. Stop module according to any of the preceding claims, **characterised in that** a guide unit (28) is provided to guide the stop element (16) as it moves out of or into the movement plane of the objects (14).

8. Stop module according to claim 7, **characterised in that** the guide unit (28) has an in particular slot-like location (27), into which the stop element (16) is completely retractable in its lower position of rest and from which the stop element partially projects in its upper functional position, wherein a wall section of the guide unit (28) located behind the stop element (16) in the current working movement direction (12, 13) serves as supporting means in at least one of the working movement directions (12, 13).

9. Stop module according to claim 8, **characterised in that** the stop element is slidably mounted in the location (27) by means of a plain bearing arrangement.

10. Stop module according to any of claims 3 to 9, **characterised in that** the stop element (16) comprises a base body (26) coupled to the spindle (46) and an end part (30) joined to the base body (26) by fastening means and used to stop the objects (14).

## Revendications

1. Module de butée, en particulier pour dispositifs d'usinage et de transport automatiques, avec un élément de butée (16), disposé au niveau d'un corps de base (15), pour des objets (14) se déplaçant dans un plan de déplacement dans un sens de mouvement de travail actuel (12, 13), lequel élément peut se déplacer hors de ce plan de déplacement et retourner dans celui-ci au moyen d'une commande électrique, un entraînement rotatif électrique étant prévu pour la commande électrique, **caractérisé en ce que** l'entraînement rotatif électrique est réalisé sous forme d'entraînement de broche (17).

2. Module de butée selon la revendication 1, **caractérisé en ce qu'**un mouvement de sortie rotatoire, qui peut être converti par le biais de moyens de conversion (21) en un mouvement linéaire de l'élément de butée (16) dirigé vers le plan de déplacement des objets (14) ou hors de celui-ci, peut être produit au moyen de l'entraînement de broche (17).

3. Module de butée selon la revendication 1 ou 2, **caractérisé en ce que** l'entraînement de broche (17) a pour moyens de conversion une broche (46) et un écrou à broche (48) interagissant avec la broche (46).

4. Module de butée selon l'une quelconque des revendications précédentes, **caractérisé en ce que** des moyens d'aide au levage (47), associés à l'entraînement de broche (17), qui aident la course descendante de l'élément de butée (16) générée par l'entraînement de broche (17) à sortir du plan de mouvement avec une force supplémentaire sont prévus .

5. Module de butée selon la revendication 4, **caractérisé en ce qu'**au moins un ressort (47) est prévu comme moyen d'aide au levage, qui est fixe d'un côté et s'appuie de l'autre contre l'écrou à broche (48) s'approchant ou s'éloignant de manière linéaire, de sorte que l'écrou est serré lors de la course ascendante et libère la force supplémentaire sous forme d'une force de rappel lors de la course descendante.

6. Module de butée selon l'une quelconque des revendications précédentes, **caractérisé en ce que** l'élément de butée (16) est réalisé et s'appuie à l'aide de moyens d'appui dans une position de fonctionnement supérieure se trouvant dans le plan de déplacement des objets (14) de sorte que des objets (14) se déplaçant dans un premier sens de mouvement de travail (12) ou des objets se déplaçant dans un deuxième sens de mouvement de travail (13) essentiellement perpendiculaire au sens de mouvement de travail (12) peuvent être arrêtés au choix.

7. Module de butée selon l'une quelconque des revendications précédentes, **caractérisé en ce qu'**une unité de guidage (28) est prévue pour guider l'élément de butée (16) lors de son déplacement hors du plan de déplacement des objets (14) ou dans celui-ci.

8. Module de butée selon la revendication 7, **caractérisé en ce que** l'unité de guidage (28) présente un logement (27) en particulier en forme de fente, dans lequel l'élément de butée (16) peut être enfoncé dans une position de repos inférieure en particulier de façon complète et de laquelle l'élément de butée est en partie en saillie dans la position de fonctionnement supérieure, une section de paroi de l'unité de guidage (28) située derrière l'élément de butée (16) dans le sens de mouvement de travail actuel (12, 13) servant de moyen d'appui dans au moins un des sens de mouvement de travail (12, 13) des objets (14).

9. Module de butée selon la revendication 8, **caractérisé en ce que** l'élément de butée (16) est logé par glissement dans le logement (27) au moyen d'un palier lisse.

10. Module de butée selon l'une quelconque des revendications 3 à 9, **caractérisé en ce que** l'élément de butée (16) présente un corps de base (26) couplé à la broche (46) et une partie d'extrémité (30) servant à stopper les objets (14) et reliée à un corps de base (26) par le biais de moyens de fixation.
